# EUROPÄISCHE PATENTSCHRIFT

(11) **EP 3 373 458 B1**
(45) Veröffentlichungstag und Bekanntmachung des Hinweises auf die Patenterteilung: **08.05.2019**
(21) Anmeldenummer: 17159840.2
(22) Anmeldetag: 08.03.2017
(51) Int. Cl.: H04B 5/00, G05D 1/00, H04B 5/02

(54) **KOMMUNIKATIONSSYSTEM UND MASCHINENANORDNUNG**
COMMUNICATION SYSTEM AND MACHINERY
SYSTÈME DE COMMUNICATION ET ENSEMBLE DE MACHINES

(43) Veröffentlichungstag der Anmeldung: 12.09.2018
(73) Patentinhaber: SICK AG, 79183 Waldkirch/Breisgau (DE)
(72) Erfinder: SCHWARZ, Adrian, 79215 Elzach (DE); PHAY, Victor Kok Heng, Singapur 507082 (SG)
(74) Vertreter: Manitz Finsterwald Patent- und Rechtsanwaltspartnerschaft mbB

(56) Entgegenhaltungen:
- EP-A1- 1 837 781
- KR-A- 20070 082 118
- "Standard ECMA-340 Near Field Communication Interface and Protocol (NFCIP-1) 3rd edition (June 2013)", ECMA International, 30. Juni 2013 (2013-06-30), XP055260355, Gefunden im Internet: URL:http://www.ecma-international.org/publ ications/files/ECMA-ST/Ecma-340.pdf [gefunden am 2016-03-22]
- JEN-HAO TENG ET AL: "RFID-based autonomous mobile car", INDUSTRIAL INFORMATICS (INDIN), 2010 8TH IEEE INTERNATIONAL CONFERENCE ON, IEEE, PISCATAWAY, NJ, USA, 13. Juli 2010 (2010-07-13), Seiten 417-422, XP031733699, ISBN: 978-1-4244-7298-7

## Beschreibung

Die vorliegende Erfindung betrifft ein fahrerloses Transportsystem mit zumindest einem ersten fahrerlosen Fahrzeug zum Transport von Waren und/oder Personen und einem Kommunikationssystem mit zumindest einem ersten und einem zweiten Transceiver zum drahtlosen, bidirektionalen Übertragen von Signalen zwischen den Transceivern, wobei jeder Transceiver eine Sendeeinrichtung und eine Empfangseinrichtung aufweist, und wobei der erste Transceiver stationär und der zweite Transceiver an dem ersten fahrerlosen Fahrzeug angeordnet ist.

Solche Kommunikationssysteme werden für verschiedene Anwendungen eingesetzt, insbesondere für industrielle Anwendungen. Eine beispielhafte industrielle Anwendung ist die Kommunikation zwischen einer stationären Einrichtung, beispielsweise einer Steuer- oder Überwachungseinrichtung, und einem oder mehreren beweglichen Maschinenelementen. Derartige bewegliche Maschinenelemente können beispielsweise Fahrzeuge eines fahrerlosen Transportsystems sein. Fahrerlose Transportsysteme werden beispielsweise in industriellen Umgebungen wie Fertigungshallen, Lagerhallen, Lagerflächen und/oder sonstigen Umgebungen sowohl innerhalb als auch außerhalb von Gebäuden eingesetzt, um Güter innerhalb dieser Umgebung zu transportieren. Auch ein Einsatz von fahrerlosen Transportsystemen zum Transport von Personen in öffentlichen und/oder nicht öffentlichen Verkehrsnetzen ist möglich.

Ein solches Kommunikationssystem kann beispielsweise dafür verwendet werden, um einerseits Steuerbefehle von einer stationären Steuereinrichtung an ein bewegliches Maschinenelement, insbesondere an ein fahrerloses Fahrzeug, zu übermitteln und andererseits auch Signale, etwa Empfangsquittierungen oder Sensorsignale von beweglichen Maschinenelementen an die Steuereinrichtung zu übermitteln.

Insbesondere bei sicherheitsgerichteten Anwendungen ist eine derartige bidirektionale Kommunikation erforderlich, um sicherzustellen, dass übermittelte Befehle auch empfangen und/oder umgesetzt wurden. Eine an sich bekannte Umsetzung einer derartigen sicheren, bidirektionalen Kommunikation besteht in der Nutzung von WLAN, welches ein lokales Funknetz bezeichnet, das beispielsweise im Rahmen der IEEE-802.1 1-Normenfamilie normiert ist. Damit eine sichere Kommunikation gewährleistet ist, kann das "Black Channel"-Prinzip angewendet werden. Hierzu wird üblicherweise zwischen die Sicherheitsanwendung und den "nichtsicheren" Standardkommunikationskanal ein Sicherheitsprotokoll integriert, welches dem Sicherheitsniveau des sicherheitsgerichteten Systems entspricht und Übertragungsfehler der darunterliegenden Kommunikationsschichten erkennt und beherrscht. Das heißt, der "nichtsichere" Übertragungskanal wird durch ein übergeordnetes "sicheres" Protokoll laufend auf seine Integrität überwacht.

Eine derartige Kommunikation mittels WLAN weist jedoch insbesondere in industriellen Umgebungen eine Reihe von Nachteilen auf. So ist der Energieverbrauch von WLAN-Systemen relativ hoch, was insbesondere die Betriebszeit eines an einem mobilen Maschinenelement angeordneten Transceivers, der nicht per Kabel mit Betriebsstrom versorgt werden kann, aufgrund begrenzter Energiespeicherkapazitäten begrenzt. Weiterhin werden die drahtlos übertragenen Signale durch die Anwesenheit von metallischen Gegenständen, wie sie in industriellen Umgebungen häufig anzutreffen sind, negativ beeinflusst. Dies kann zwar durch eine Erhöhung der Sendeleistung kompensiert werden, was aber wiederum zu Lasten der Betriebsdauer bei einem Energiespeicher betriebenen Transceiver führt. Schließlich bestehen bei sicherheitsgerichteten Anwendungen erhöhte Anforderungen an die Verfügbarkeit und Störsicherheit eines drahtlosen Kommunikationssystems.

Derartige sichere Kommunikationssysteme auf Basis des WLAN-Standards sind auf dem Markt nur eingeschränkt verfügbar und/oder mit hohen Kosten verbunden.

Das Dokument "RFID-based Autonomous Mobile Car", Jen-Hao Teng et al., INDIN 2010, 8th IEEE International Conference on Industrial Informatics, Piscataway, NJ, USA, 13.07.2010, S. 417 - 422 beschreibt ein System, bei dem die Navigation eines autonomen Fahrzeugs mit Hilfe von passiven RFID-Tags oder RFID-Transpondern erfolgt, die entlang der Fahrwege angeordnet sind und von einem im Fahrzeug angeordneten RFID-Lesegerät ausgelesen werden können.

KR 2007 0082118 A offenbart ein System mit einem bidirektionalen digitalen Fahrzeugnummernschild, welches sowohl einen RFID-Transponder als auch ein RFID-Lesegerät aufweist. Verschiedene straßenseitige Einrichtungen wie Verkehrszeichen und andere stationäre Signaleinrichtungen können ebenfalls über RFID-Transponder und RFID-Lesegeräte verfügen, so dass ein gegenseitiger Informationsaustausch erfolgen kann.

Es ist die Aufgabe der Erfindung, ein fahrerloses Transportsystem mit zumindest einem fahrerlosen Fahrzeug und einem Kommunikationssystem bereitzustellen, wobei das Kommunikationssystem kostengünstig ist und insbesondere auch für sicherheitskritische Anwendungen verwendet werden kann, und wobei eine Überwachung eines von dem Transportsystem genutzten Fahrwegbereichs verbessert ist.

Die Lösung der Aufgabe erfolgt durch ein fahrerloses Transportsystem mit den Merkmalen des Anspruchs 1. Erfindungsgemäß ist vorgesehen, dass jede Sendeeinrichtung einen RFID-Transponder umfasst, welcher dazu eingerichtet ist, die Signale als Transpondersignale zu übertragen, und dass jede Empfangseinrichtung ein RFID-Lesegerät umfasst, welches zum Empfangen von übertragenen Transpondersignalen eingerichtet ist. Jeder Transceiver umfasst demnach sowohl einen RFID-Transponder als auch ein RFID-Lesegerät, wobei ein Transceiver nicht zwingend als integrierte Einheit mit einem RFID-Transponder und einem RFID-Lesegerät ausgebildet sein muss, sondern auch der RFID-Transponder und das RFID-Lesegerät als jeweilige separate Einheiten ausgestaltet sein können, die benachbart oder auch voneinander beabstandet angeordnet sein können.

Zur Konfiguration eines Kommunikationssystems können insbesondere standardisierte RFID-Komponenten eingesetzt werden, so dass auf kostengünstige Weise ein drahtloses Kommunikationssystem implementiert werden kann. Das fahrerlose Transportsystem kann ein oder mehrere an den fahrerlosen Fahrzeugen angeordnete Transceiver umfassen.

Vorteilhafterweise umfasst ein jeweiliges Transpondersignal einen Datensatz, dessen Länge und/oder Inhalt variabel ist. Somit können nicht lediglich nur einfache feststehende Identifikationen übertragen werden, wie es beispielsweise bei RFID-Systemen zur Produktkennzeichnung oder Diebstahlsicherung der Fall ist, sondern es können alternativ oder zusätzlich auch andere Informationen, insbesondere Informationen mit veränderlichem Inhalt, übertragen werden.

Gemäß einer vorteilhaften Ausführungsform ist zumindest einer der Transceiver mit einer zugeordneten Steuereinrichtung verbunden, welche zum Erzeugen und Übermitteln von zu übertragenden Steuercodes an den Transceiver und/oder zum Erfassen von übertragenen Steuercodes von dem Transceiver eingerichtet ist, wobei ein jeweiliger Steuercode als Bestandteil eines Transpondersignals übertragen wird. Dies kann beispielsweise benutzt werden, um mittels des Steuercodes Steuerbefehle von einer stationären Steuereinrichtung an eine mobile Steuereinrichtung, beispielsweise an eine Steuereinrichtung eines fahrerlosen Fahrzeugs, zu übermitteln, wobei ein Übermitteln selbstverständlich auch in umgekehrter Richtung vorgesehen sein kann. Insofern ist unter dem Begriff "Steuercode" auch ein Übermitteln von Codes, insbesondere Quittierungscodes, als Antwort auf einen empfangenen Steuercode und/oder ein Übermitteln von Sensorsignalen, Zustandssignalen oder dergleichen zu verstehen. So können beispielsweise unterschiedliche Steuerbefehle an ein empfangendes RFID-Lesegerät übermittelt werden, so dass letztlich die Transpondersignale bezüglich Inhalt und/oder Länge variabel sein können.

Gemäß einer weiteren vorteilhaften Ausführungsform ist in der Steuereinrichtung eine Tabelle von Steuerbefehlen gespeichert, wobei ein jeweiliger Steuercode zumindest einen der gespeicherten Steuerbefehle umfasst. In der Tabelle können beispielsweise Steuerbefehle zur Steuerung eines von der Steuereinrichtung gesteuerten fahrerlosen Fahrzeugs gespeichert sein, wobei die Steuerbefehle als sehr kurze Codes implementiert sein können, die z.B. eine Länge von einem einzigen Byte oder sogar nur von wenigen Bit (z.B. 4, 3, 2 oder 1 Bit) aufweisen können. Die Interpretation der Steuerbefehle erfolgt dann mit Hilfe der Tabelle, wobei zweckmäßigerweise sowohl der sendende Transceiver als auch der empfangende Transceiver mit einer jeweiligen Steuereinrichtung verbunden sind, in welcher eine entsprechende Tabelle hinterlegt ist. Die genannte Tabelle stellt somit eine Lookup-Tabelle oder eine Art Wörterbuch dar.

Vorteilhafterweise ist die Steuereinrichtung als Sicherheitssteuereinrichtung ausgebildet, wobei die Steuercodes mittels eines sicheren Übertragungsprotokolls übertragen werden. Derartige sichere Übertragungsprotokolle dienen dazu, die Gefahr eines Verlustes oder einer Veränderung von zu übertragenden Daten zu verringern oder auszuschließen. Auch hier kann das "Black Channel"-Prinzip verwendet werden. Bekannte sichere Übertragungsprotokolle sind beispielsweise CIP (Common Industrial Protocol, z.B. CPF2 gemäß der Norm IEC 61158), ProfiSafe oder IO-LinkSafety der PNO (PROFIBUS Nutzerorganisation e.V.) oder EtherCAT FSoE (FSoE = Fail Safe over EtherCAT) gemäß der Norm IEC 61158 bzw. IEC 61784-3-12.

Vorteilhafterweise umfasst die von zumindest einem der Transceiver übertragenen Signale eine Kennung, welche diesen Transceiver und/oder eine mit diesem Transceiver verbundene Steuereinrichtung identifiziert. Dadurch kann gewährleistet werden, dass einerseits Transpondersignale nur an bestimmte, zum Empfang vorgesehene Empfangseinrichtungen übermittelt werden und andererseits nur solche Transpondersignale empfangen oder berücksichtigt werden, die von vorbestimmten, der Kennung zugeordneten Sendeeinrichtungen empfangen bzw. berücksichtigt werden.

Gemäß einer weiteren vorteilhaften Ausführungsform sind die Transceiver für eine drahtlose Kommunikation in einem Frequenzbereich von 30 bis 500 kHz, insbesondere mit einer Frequenz von 125 kHz, und/oder in einem Frequenzbereich von 3 bis 30 MHz, insbesondere mit einer Frequenz von 13,56 MHz ausgelegt. Die Signalübertragung erfolgt also im Langwellenbereich (LF-Bereich, 30 bis 500 kHz) oder im Kurzwellenbereich (HF-Bereich, 3 bis 30 MHz). RFID-Lesegeräte und - Transponder für diese Frequenzbereiche sind besonders preisgünstig erhältlich und eignen sich in besonderer Weise für industrielle Umgebungen, bei denen die Kommunikation durch hohe Luftfeuchtigkeit und/oder die Anwesenheit von metallischen Gegenständen beeinträchtigt ist. Die in diesen Frequenzbereichen geringen Datenübertragungsraten und Reichweiten können insbesondere bei der Verwendung in fahrerlosen Transportsystemen in Kauf genommen werden oder bieten hier sogar besondere Vorteile. So kann eine reduzierte Reichweite für eine Lokalisierung von fahrerlosen Fahrzeugen genutzt werden. Grundsätzlich ist es aber nicht ausgeschlossen, auch RFID-Komponenten zu verwenden, die in höheren Wellenlängenbereichen arbeiten, beispielsweise bei 433 MHz (UHF-Bereich), 850 bis 950 MHz oder höher.

Der Einsatz des erfindungsgemäßen Kommunikationssystems bei fahrerlosen Transportsystemen bietet besondere Vorteile. Bei einem fahrerlosen Transportsystem kann eine Navigation der fahrerlosen Fahrzeuge in an sich bekannter Weise mit Hilfe von Steuersystemen erfolgen, die beispielsweise im Fahrzeug vorhanden sind und/oder mit dem Fahrzeug über das erfindungsgemäße Kommunikationssystem oder über eine zusätzliche Kommunikationsverbindung kommunizieren können, wobei ein derartiges Steuersystem einerseits mit einem oder mehreren Sensoren zur Positionsbestimmung des Fahrzeugs verbunden sein kann und andererseits mit entsprechenden Antriebs- und Lenksystemen des Fahrzeugs kommunizieren kann, um das Fahrzeug durch die Umgebung zu navigieren. Die Fahrzeuge können mit geeigneten Überwachungssensoren zur Vermeidung von Kollisionen mit Personen, feststehenden Hindernissen oder anderen Fahrzeugen ausgerüstet sein.

Allerdings sind derartige mitfahrende Überwachungssensoren nicht in jeder Situation ausreichend, da nicht immer alle Fahrwegbereiche von den mitfahrenden Überwachungssensoren eingesehen werden können. Insbesondere an Kreuzungen, in deren Bereich Gebäude oder sichtbehindernde Hindernisse stehen, besteht die Gefahr, dass Fahrzeuge oder Personen, die den vorgesehenen Fahrweg eines fahrerlosen Fahrzeugs kreuzen, nicht oder nicht rechtzeitig erfasst werden. Zur Verringerung derartiger Gefahren können unübersichtliche Fahrwegbereiche durch stationäre Überwachungseinrichtungen, beispielsweise Laserscanner, überwacht werden. Die stationären Überwachungseinrichtungen können beispielsweise an Gebäudeecken oder Hindernisecken angeordnet werden, so dass das Entstehen von toten Winkeln weitgehend vermieden wird.

Während eine solche stationäre Überwachungseinrichtung ein Objekt, beispielsweise eine Person oder ein anderes Fahrzeug, in dem überwachten Fahrwegbereich detektiert, kann an das fahrerlose Fahrzeug ein Steuersignal oder Steuerbefehl übermittelt werden, welches das Steuersystem des Fahrzeugs so beeinflusst, dass eine Kollision vermieden wird.

Wenn die stationäre Überwachungseinrichtung ein Objekt in dem Fahrwegbereich detektiert, ist es jedoch oft schwierig oder unmöglich zu unterscheiden, ob es sich bei dem Objekt um eine Person oder um ein Fahrzeug handelt. Wenn nämlich eine potentielle Gefahr einer Mensch-Fahrzeug-Kollision besteht, darf das Fahrzeug in den Fahrwegbereich nicht einfahren, solange die gefährdete Person nicht durch den Überwachungssensor des Fahrzeugs erkennbar ist. Wenn es sich jedoch bei dem detektierten Objekt um ein weiteres Fahrzeug handelt und lediglich die Gefahr einer Fahrzeug-Fahrzeug-Kollision besteht, darf das eine Fahrzeug in den Fahrwegbereich einfahren, wenn sichergestellt ist, dass das andere Fahrzeug steht.

Um eine derartige Unterscheidung zu ermöglichen, kann vorgesehen sein, dass der an dem fahrerlosen Fahrzeug vorgesehene RFID-Transponder dazu eingerichtet ist, ein Transpondersignal zu übertragen, welches zumindest eine fahrzeugspezifische Kennung umfasst, wobei die stationäre Überwachungseinrichtung mit einer Steuereinheit verbunden ist, welche wiederum mit einem RFID-Lesegerät verbunden ist, welches zum Empfangen eines von dem RFID-Transponder übertragenen Transpondersignals eingerichtet ist. Die Steuereinheit ist dazu eingerichtet, ein Steuersignal für das fahrerlose Fahrzeug auf der Grundlage des empfangenen Transpondersignals zu erzeugen. Die Steuereinheit der stationären Überwachungseinrichtung ist dazu ausgelegt, ein von dem Sensor, beispielsweise einem Laserscanner erzeugtes Erfassungssignal mit einem empfangenen Transpondersignal zu verknüpfen. Wenn etwa von einem durch den Überwachungssensor erfassten Objekt zugleich ein entsprechendes Transpondersignal empfangen wird, geht die Überwachungseinrichtung davon aus, dass es sich bei dem erfassten Objekt um ein Fahrzeug handelt. Wird ein entsprechendes Transpondersignal jedoch nicht empfangen oder stimmt der Bereich, aus dem das Transpondersignal empfangen wurde, nicht mit dem Bereich, in welchem der Sensor das Objekt detektiert hat, überein, so wird angenommen, dass es sich bei dem durch den Sensor erfassten Objekt um eine Person handelt. Die Überwachungseinrichtung bzw. deren Steuereinheit kann auf der Grundlage dieser Identifikation oder Unterscheidung entsprechende restriktive oder permissive Steuerbefehle aussenden, beispielsweise Befehle zum Anhalten oder Ausweichen, Fahrtfreigaben, Lenkbefehle und/oder Geschwindigkeitsbeschränkungen.

Aufgrund der fahrzeugspezifischen Kennung ist es möglich, ein von dem Sensor erfasstes Objekt als ein bestimmtes Fahrzeug zu identifizieren und spezifische, für dieses Fahrzeug bestimmte Steuersignale zu erzeugen und mittels des erfindungsgemäßen Kommunikationssystems an dieses Fahrzeug zu übermitteln.

Im Vergleich zu anderen denkbaren Lösungen besteht ein Vorteil der erfindungsgemäßen Verwendung von RFID-Komponenten in einem geringen Stromverbrauch für die Kommunikation mit der Überwachungseinrichtung, was die Stromspeicher der fahrerlosen Fahrzeuge entlastet.

Gemäß einer vorteilhaften Ausführungsform umfasst die Tabelle Steuerbefehle zum Steuern des fahrerlosen Transportsystems. So können zum Beispiel Steuerbefehle als einfache Zahlencodes (1, 2, 3, ...) übermittelt werden, die dann im RFID-Lesegerät des fahrerlosen Fahrzeugs mit Hilfe der Tabelle in entsprechende Steuerkommandos für das Fahrzeug (anhalten, fahren, langsam, schnell, links, rechts, vorwärts, rückwärts, ...) umgesetzt werden.

Weitere vorteilhafte Ausgestaltungen der Erfindung ergeben sich aus den Unteransprüchen, der Beschreibung und den Zeichnungen.

Die Erfindung wird nachfolgend anhand von Ausführungsbeispielen mit Bezug auf die Figuren beschrieben.
- Fig. 1: zeigt schematisch ein Kommunikationssystem gemäß einer Ausführungsform der Erfindung, und
- Fig. 2: zeigt schematisch eine Szene, in welcher ein fahrerloses Transportsystem mit einem erfindungsgemäßen Kommunikationssystem betrieben wird.

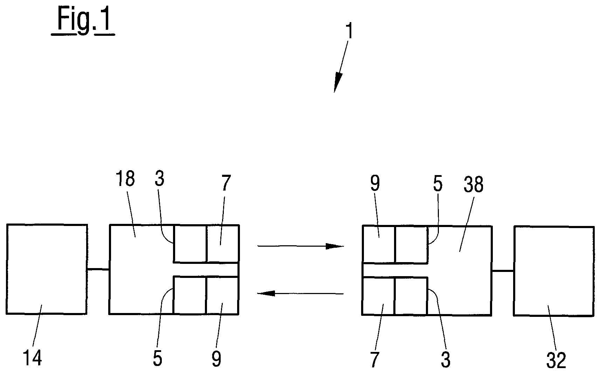

Fig. 1 zeigt ein Kommunikationssystem 1 gemäß einer beispielhaften Ausführungsform der Erfindung. Das Kommunikationssystem 1 umfasst einen ersten Transceiver 18 und einen zweiten Transceiver 38 zum drahtlosen, bidirektionalen Übertragen von Signalen zwischen den Transceivern 18, 38, wobei jeder Transceiver 18, 38 eine jeweilige Sendeeinrichtung 3 und eine jeweilige Empfangseinrichtung 5 aufweist. Jede Sendeeinrichtung 3 umfasst einen RFID-Transponder 7, welcher dazu eingerichtet ist, die Signale als Transpondersignale zu übertragen. Jede Empfangseinrichtung 5 umfasst ein RFID-Lesegerät 9, welches zum Empfangen von übertragenen Transpondersignalen eingerichtet ist. Die jeweiligen RFID-Lesegeräte 9 können ferner zum Erzeugen von magnetischen Wechselfeldern in geringer Reichweite oder von hochfrequenten Radiowellen ausgelegt sein, durch welche die RFID-Transponder 7 mit Energie versorgt werden können und/oder zum Übertragen von Transpondersignalen angeregt werden können.

Der Transceiver 18 ist mit einer Steuereinrichtung 14 und der Transceiver 38 mit einer Steuereinrichtung 32 verbunden. Die Steuereinrichtungen 14, 32 können zum Erzeugen und Übermitteln von zu übertragenen Steuercodes an den jeweils zugeordneten Transceiver 18 bzw. 38 und/oder zum Erfassen von übertragenen Steuercodes von dem jeweils zugeordneten Transceiver 18 bzw. 38 eingerichtet sein, wobei ein jeweiliger Steuercode als Bestandteil eines Transpondersignals übertragen wird.

In den Steuereinrichtungen 14, 38 können jeweilige einander entsprechende Tabellen von Steuerbefehlen gespeichert sein, wobei ein oder mehrere Steuerbefehle innerhalb eines jeweiligen Steuercodes übertragen werden können.

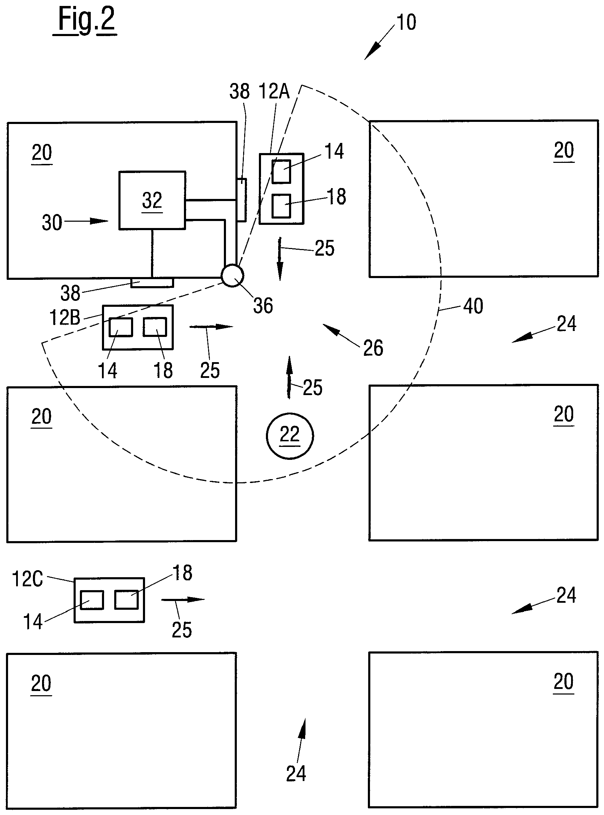

Die Verwendung eines derartigen Kommunikationssystems 1 in einem fahrerlosen Transportsystem wird nachfolgend mit Bezug auf Fig. 2 beschrieben.

Eine beispielhafte Umgebung oder Szene 10, in welcher ein solches fahrerloses Transportsystem mit einem Kommunikationssystem 1 gemäß Fig. 1 betrieben wird, umfasst mehrere Hindernisse 20, beispielsweise Maschinen, Lagerbehälter, Gebäude oder Gebäudeteile, zwischen denen mehrere sich kreuzende Fahrwege 24 hindurchführen.

Das fahrerlose Transportsystem umfasst mehrere fahrerlose Fahrzeuge 12A bis 12C, welche jeweils eine Steuereinrichtung oder Fahrzeugsteuerung 14 zur Steuerung des jeweiligen Fahrzeugs 12A bis 12C durch die Szene umfassen. Die Fahrzeuge 12A bis 12C können ferner zumindest einen jeweiligen, mit der Fahrzeugsteuerung 14 verbundenen Überwachungssensor (nicht dargestellt) zur Überwachung einer Fahrzeugumgebung aufweisen. Die Fahrzeugsteuerung 14 ist mit einem jeweiligen Transceiver 18 verbunden. Die Transceiver können 18 nicht nur fest programmierte Kennungen, sondern auch zusätzliche Informationen oder Daten, die sie von der Fahrzeugsteuerung 14 übermittelt bekommen, übertragen, beispielsweise Befehlsquittierungen oder Zustandsmeldungen, z.B. den Ladezustand eines Stromspeichers.

Die Fahrzeuge 12A bis 12C bewegen sich in jeweiligen, in Fig. 2 durch Pfeile 25 angedeuteten Fahrrichtungen auf den Fahrwegen 24.

An einem der Hindernisse 20 ist eine stationäre Überwachungseinrichtung 30 vorgesehen, welche eine zentrale Steuereinrichtung oder Steuereinheit 32 umfasst. Die Überwachungseinrichtung 30 weist einen mit der Steuereinheit 32 verbundenen Sensor 36 auf, der dazu eingerichtet ist, die Anwesenheit von Objekten in einem Fahrwegbereich 26 zu detektieren. Der Sensor 36 kann beispielsweise ein optischer Sensor, insbesondere Laserscanner, sein und ist vorzugsweise zur ortsaufgelösten Erfassung von Objekten eingerichtet. Ein Erfassungsbereich 40 des Sensors 36 ist durch eine gestrichelte Linie angedeutet.

Durch die Überwachungseinrichtung 30 ist es möglich, auch solche Bereiche der Fahrwege 24 zu überwachen, die von an den Fahrzeugen 12A bis 12C angeordneten Überwachungssensoren nicht oder erst zu einem sehr späten Zeitpunkt einsehbar sind. So können sich beispielsweise die Fahrzeuge 12A und 12B in der in Fig. 2 dargestellten Situation nicht direkt "sehen", werden jedoch beide von dem Sensor 36 erfasst.

Die Steuereinheit 32 ist ferner mit zwei Transceivern 38 verbunden, welche an verschiedenen Seiten des die Überwachungseinrichtung 30 aufweisenden Hindernisses 20 im Bereich der jeweiligen Fahrwege 24 angeordnet sind. Die Transceiver 38 können regelmäßig an die Transceiver 18 gerichtete Anforderungen zur Aussendung von Transpondersignalen und/oder Transpondersignale aussenden und Transpondersignale empfangen, die von den Transceivern 18 der Fahrzeuge 12A bis 12C ausgesendet werden.

Nachfolgend wird ein beispielhaftes Betriebsszenario beschrieben. Die Fahrzeuge 12A und 12B sowie eine Person 22 nähern sich in den durch Pfeile 25 angedeuteten Richtungen dem von der Überwachungseinrichtung 30 überwachten Fahrwegbereich 26. Sobald sie in den Erfassungsbereich 40 eintreten, werden sie von dem Sensor 36 als jeweilige Objekte erfasst. Der Sensor 36 bzw. die damit verbundenen Steuereinheit 32 sind jedoch nicht in der Lage, alleine aufgrund der von dem Sensor 36 erzeugten Erfassungssignale zu unterscheiden, ob es sich bei den erfassten Objekten um Fahrzeuge oder Personen handelt.

Sobald jedoch Fahrzeuge in die Nähe eines Transceivers 38 gelangen, können ein oder mehrere Transceiver 38 jeweilige Transpondersignale von den Transceivern 18 der Fahrzeuge 12A, 12B empfangen, wobei die Transpondersignale jeweilige fahrzeugspezifische Kennungen umfassen, die eine Identifizierung der einzelnen Fahrzeuge 12A bis 12C ermöglichen. Da die Position der Transceiver 38 innerhalb der Szene 10 bekannt ist, kann die Steuereinheit 32 den auf die Fahrzeuge 12A, 12B zurückgehenden Erfassungssignalen des Sensors 36 die entsprechenden, von den jeweiligen Transceivern 18 übermittelten Kennungen zuordnen.

Für das auf die Person 22 zurückgehende Erfassungssignal des Sensors 36 kann jedoch keine Kennung zugeordnet werden, so dass die Steuereinheit 32 aufgrund dieser fehlenden Kennung davon ausgehen muss, dass es sich bei dem Objekt 22 um eine Person handelt, selbst wenn sich an dieser Stelle lediglich ein systemfremdes Fahrzeug oder ein anderes nicht menschliches Hindernis befinden würde, welches keine Transpondersignale überträgt.

Da aus Sicherheitsgründen auf jeden Fall eine Kollision mit einem derartigen nicht identifizierbaren Objekt verhindert werden muss, sendet die Steuereinheit 32 über die Transceiver 38 Steuersignale an die Fahrzeuge 12A, 12B aus, die einen Befehl zum sofortigen Anhalten umfassen. Diese Steuerbefehle können die spezifischen Kennungen der Fahrzeuge 12A, 12B umfassen, so dass die Fahrzeugsteuerungen 14 nur dann auf diese Steuersignale reagieren, wenn eine jeweilige mit den Steuersignalen ausgesendete Kennung mit der Kennung des der empfangenden Fahrzeugsteuerung 14 zugeordneten Fahrzeugs entspricht. Die Fahrzeugsteuerungen 14 können mittels der Transceiver 18 Quittungssignale, die den Empfang der Steuersignale bestätigen, und/oder andere Steuerbefehle an die Transceiver 38 bzw. die Überwachungseinrichtung 30 übermitteln.

Aufgrund der begrenzten Reichweite des Kommunikationssystems empfängt das Fahrzeug 12C kein Steuersignal. Das Fahrzeug 12C befindet sich nicht in dem überwachten Fahrwegbereich 26 und nähert sich diesem auch nicht an. Somit kann das Fahrzeug 12C seinen Weg unbeeinflusst fortsetzen.

Wenn der Sensor 36 feststellt, dass sich die Person 22 nicht mehr im Fahrwegbereich 26 befindet, kann die Steuereinheit 32 über die Transceiver 38 anschließend entsprechende Steuerbefehle an die Fahrzeuge 12A, 12B übermitteln, die diesen die Erlaubnis geben, ihre Fahrt fortzusetzen. Um eine Kollision zwischen den Fahrzeugen 12A, 12B zu vermeiden, kann die Steuereinheit 32 eine Reihenfolge festlegen, in welcher die Fahrzeuge 12A, 12B ihre Fahrt fortsetzen dürfen.

Zwischen den Fahrzeugen 12A bis 12C und der Überwachungseinrichtung 30 besteht demnach eine bidirektionale RFID-Verbindung, so dass in beiden Richtungen Signale, insbesondere Steuersignale und/oder Kennungen, ausgetauscht werden können.

Gemäß einer Abwandlung können die Transceiver 18 der Fahrzeuge 12A bis 12C auch direkt, d.h. ohne Umweg über die Transceiver 38, miteinander kommunizieren.

### Bezugszeichenliste

- 1: Kommunikationssystem
- 3: Sendeeinrichtung
- 5: Empfangseinrichtung
- 7: RFID-Transponder
- 9: RFID-Lesegerät
- 10: Szene
- 12A - 12C: Fahrzeug
- 14: Steuereinrichtung, Fahrzeugsteuerung
- 18, 38: Transceiver
- 20: Hindernis
- 22: Person
- 24: Fahrweg
- 25: Bewegungsrichtung
- 26: Fahrwegbereich
- 30: Überwachungseinrichtung
- 32: Steuereinrichtung, Steuereinheit
- 36: Sensor
- 40: Erfassungsbereich

## Patentansprüche

1. Fahrerloses Transportsystem, umfassend zumindest ein erstes fahrerloses Fahrzeug (12A - 12C) zum Transport von Waren und/oder Personen und ein Kommunikationssystem (1) mit zumindest einem ersten und einem zweiten Transceiver (18, 38) zum drahtlosen, bidirektionalen Übertragen von Signalen zwischen den Transceivern (18, 38), wobei jeder Transceiver (18, 38) eine Sendeeinrichtung (3) und eine Empfangseinrichtung (5) aufweist, wobei der erste Transceiver (18) stationär und der zweite Transceiver (38) an dem ersten fahrerlosen Fahrzeug 12A - 12C) angeordnet ist,
wobei jede Sendeeinrichtung (3) einen RFID-Transponder (7) umfasst, welcher dazu eingerichtet ist, die Signale als Transpondersignale zu übertragen, und
wobei jede Empfangseinrichtung (5) ein RFID-Lesegerät (9) umfasst, welches zum Empfangen von übertragenen Transpondersignalen eingerichtet ist,
wobei der erste Transceiver (18) mit einer Steuereinheit (32) einer stationären Überwachungseinrichtung (30) zur Überwachung eines Fahrwegbereichs (26) verbunden ist, welche dazu eingerichtet ist, ein Objekt in dem Fahrwegbereich (26) zu erfassen,
wobei der erste Transceiver (18) zum Empfangen eines von dem zweiten Transceiver übertragenen Transpondersignals eingerichtet ist, welches eine fahrzeugspezifische Kennung umfasst, und
wobei die Steuereinheit (32) dazu eingerichtet ist, auf der Grundlage der fahrzeugspezifischen Kennung ein erfasstes Objekt als ein bestimmtes Fahrzeug (12A - 12C) zu identifizieren und spezifische, für dieses Fahrzeug (12A - 12C) bestimmte Steuersignale, Steuercodes und/oder Steuerbefehle zu erzeugen und mittels des Kommunikationssystems an dieses Fahrzeug (12A - 12C) zu übermitteln.

2. Transportsystem nach Anspruch 1,
**dadurch gekennzeichnet,**
**dass** ein jeweiliges Transpondersignal einen Datensatz umfasst, dessen Länge und/oder Inhalt variabel ist.

3. Transportsystem nach Anspruch 1 oder 2,
**dadurch gekennzeichnet,**
**dass** zumindest einer der Transceiver (18, 38) mit einer zugeordneten Steuereinrichtung (14, 32) verbunden ist, welche zum Erzeugen und Übermitteln von zu übertragenden Steuercodes an den Transceiver (18, 38) und/oder zum Erfassen von übertragenen Steuercodes von dem Transceiver (18, 38) eingerichtet ist, wobei ein jeweiliger Steuercode als Bestandteil eines Transpondersignals übertragen wird.

4. Transportsystem nach Anspruch 3,
**dadurch gekennzeichnet,**
**dass** in der Steuereinrichtung (14, 32) eine Tabelle von Steuerbefehlen gespeichert ist, und
**dass** ein jeweiliger Steuercode zumindest einen der gespeicherten Steuerbefehle umfasst.

5. Transportsystem nach Anspruch 3 oder 4,
**dadurch gekennzeichnet,**
**dass** die Steuereinrichtung (14, 32) als Sicherheitssteuereinrichtung ausgebildet ist, wobei die Sicherheitssteuereinrichtung zum Übertragen von Steuercodes mittels eines sicheren Übertragungsprotokolls ausgebildet ist.

6. Transportsystem nach einem der vorhergehenden Ansprüche,
**dadurch gekennzeichnet,**
**dass** die von zumindest einem der Transceiver (18, 38) übertragenen Signale eine Kennung umfassen, welche diesen Transceiver (18, 38) und/oder eine mit diesem Transceiver (18, 38) verbundene Steuereinrichtung (14, 32) identifiziert.

7. Transportsystem nach einem der vorhergehenden Ansprüche,
**dadurch gekennzeichnet,**
**dass** die Transceiver (18, 38) für eine drahtlose Kommunikation
- in einem Frequenzbereich von 30 bis 500 kHz, insbesondere mit einer Frequenz von 125 kHz, und/oder
- in einem Frequenzbereich von 3 bis 30 MHz, insbesondere mit einer Frequenz von 13,56 MHz, und/oder
- in einem Frequenzbereich von 300 bis 3000 MHz, insbesondere mit einer Frequenz von 433 MHz oder einem Frequenzbereich von 850 bis 950 MHz,
ausgelegt sind.

8. Transportsystem nach Anspruch 4,
**dadurch gekennzeichnet,**
**dass** die Tabelle Steuerbefehle zum Steuern des fahrerlosen Fahrzeugs (12A - 12C) umfasst.

## Claims

1. A driverless transport system comprising at least one first driverless vehicle (12A - 12C) for transporting goods and/or persons; and a communication system (1) having at least one first and one second transceiver (18, 38) for the wireless bidirectional transmission of signals between the transceivers (18, 38), wherein each transceiver (18, 38) has a transmission device (3) and a reception device (5), wherein the first transceiver (18) is arranged as stationary and the second transceiver (38) is arranged at the first driverless vehicle (12A - 12C), wherein each transmission device (3) comprises an RFID transponder (7) which is configured to transmit the signals as transponder signals, and
wherein each reception device (5) comprises an RFID reading device (9) which is configured to receive transmitted transponder signals;
wherein the first transceiver (18) is connected to a control unit (32) of a stationary monitoring device (30) for monitoring a travel path zone (26), said stationary monitoring device (30) being configured to detect an object in the travel path zone (26);
wherein the first transceiver (18) is configured to receive a transponder signal which is transmitted by the second transceiver and which comprises a vehicle-specific identifier; and
wherein the control unit (32) is configured to identify a detected object as a specific vehicle (12A - 12C) on the basis of the vehicle-specific identifier and to generate specific control signals, control codes and/or control commands intended for this vehicle (12A - 12C) and to transmit them to this vehicle (12A - 12C) by means of the communication system.

2. A transport system in accordance with claim 1,
**characterized in that**
a respective transponder signal comprises a data set whose length and/or content is/are variable.

3. A transport system in accordance with claim 1 or claim 2,
**characterized in that**
at least one of the transceivers (18, 38) is connected to an associated control device (14, 32) which is configured to generate and to transmit control codes to be transmitted to the transceiver (18, 38) and/or to detect transmitted control codes from the transceiver (18, 38), with a respective control code being transmitted as part of a transponder signal.

4. A transport system in accordance with claim 3,
**characterized in that**
a table of control commands is stored in the control device (14, 32); and **in that** a respective control code comprises at least one of the stored control commands.

5. A transport system in accordance with claim 3 or claim 4,
**characterized in that**
the control device (14, 32) is configured as a safety control device, with the safety control device being configured to transmit control codes by means of a safe transmission protocol.

6. A transport system in accordance with any one of the preceding claims,
**characterized in that**
the signals transmitted by at least one of the transceivers (18, 38) comprise an identifier which identifies this transceiver (18, 38) and/or a control device (14, 32) connected to said transceiver (18, 38).

7. A transport system in accordance with any one of the preceding claims,
**characterized in that**
the transceivers (18, 38) are adapted for a wireless communication
- in a frequency range from 30 to 500 kHz, in particular at a frequency of 125 kHz; and/or
- in a frequency range from 3 to 30 MHz, in particular at a frequency of 13.56 MHz; and/or
- in a frequency range from 300 to 3000 MHz, in particular at a frequency of 433 MHz, or in a frequency range from 850 to 950 MHz.

8. A transport system in accordance with claim 4,
**characterized in that**
the table comprises control commands for controlling the driverless vehicle (12A - 12C).

## Revendications

1. Système de transport sans conducteur, comportant au moins un premier véhicule (12A - 12C) sans conducteur pour transporter des marchandises et/ou des personnes, et un système de communication (1) pourvu d'au moins un premier et un second émetteur/récepteur (18, 38) pour la transmission bidirectionnelle sans fil de signaux entre les émetteurs/récepteurs (18, 38),
dans lequel
chaque émetteur/récepteur (18, 38) comprend un moyen émetteur (3) et un moyen récepteur (5),
le premier émetteur/récepteur (18) est stationnaire et le second émetteur/récepteur (38) est agencé sur le premier véhicule (12A - 12C) sans conducteur,
chaque moyen émetteur (3) comprend un transpondeur RFID (7) qui est conçu pour transmettre les signaux sous forme de signaux de transpondeur, et
chaque moyen récepteur (5) comprend un appareil de lecture RFID (9) qui est conçu pour recevoir des signaux de transpondeur transmis,
le premier émetteur/récepteur (18) est connecté à une unité de commande (32) d'un dispositif de surveillance stationnaire (30) pour surveiller une zone de trajet de déplacement (26), qui est conçu pour détecter un objet dans la zone de trajet de déplacement (26),
le premier émetteur/récepteur (18) est conçu pour recevoir un signal de transpondeur transmis par le second émetteur/récepteur, qui inclut un identifiant spécifique au véhicule, et
l'unité de commande (32) est conçue pour identifier, à la base de l'identifiant spécifique au véhicule, un objet détecté comme un véhicule déterminé (12A - 12C) et pour générer des signaux de commande, des codes de commande et/ou des ordres de commande spécifiques déterminés pour ledit véhicule (12A - 12C) et pour les transmettre audit véhicule (12A - 12C) au moyen du système de communication.

2. Système de transport selon la revendication 1,
**caractérisé en ce que**
un signal de transpondeur respectif inclut un ensemble de données dont la longueur et/ou le contenu est variable.

3. Système de transport selon la revendication 1 ou 2,
**caractérisé en ce que**
l'un au moins des émetteurs/récepteurs (18, 38) est connecté à un moyen de commande associé (14, 32) qui est conçu pour générer et pour transmettre de codes de commande à transmettre à l'émetteur/récepteur (18, 38) et/ou pour détecter des codes de commande transmis depuis l'émetteur-récepteur (18, 38), un code de commande respectif étant transmis en faisant partie d'un signal de transpondeur.

4. Système de transport selon la revendication 3,
**caractérisé en ce que**
un tableau d'ordres de commande est mémorisé dans le moyen de commande (14, 32), et
un code de commande respectif inclut l'au moins des ordres de commande mémorisés.

5. Système de transport selon la revendication 3 ou 4,
**caractérisé en ce que**
le moyen de commande (14, 32) est réalisé sous forme de moyen de commande de sécurité, le moyen de commande de sécurité étant réalisé pour transmettre des codes de commande à l'aide d'un protocole de transmission sécurisé.

6. Système de transport selon l'une des revendications précédentes,
**caractérisé en ce que**
les signaux transmis par l'un au moins des émetteurs/récepteurs (18, 38) incluent un identifiant qui identifie ledit émetteur/récepteur (18, 38) et/ou un moyen de commande (14, 32) connecté audit émetteur/récepteur (18, 38).

7. Système de transport selon l'une des revendications précédentes,
**caractérisé en ce que**
les émetteurs/récepteurs (18, 38) sont conçus pour une communication sans fil
- dans une plage de fréquences de 30 à 500 kHz, en particulier à une fréquence de 125 kHz, et/ou
- dans une plage de fréquences de 3 à 30 MHz, en particulier à une fréquence de 13,56 MHz, et/ou
- dans une plage de fréquences de 300 à 3000 MHz, en particulier à une fréquence de 433 MHz, ou dans une plage de fréquences de 850 à 950 MHz.

8. Système de transport selon la revendication 4,
**caractérisé en ce que**
le tableau comprend des ordres de commande pour commander le véhicule (12A - 12C) sans conducteur.
